# EUROPÄISCHE PATENTSCHRIFT

(11) **EP 1 531 114 B1**
(45) Veröffentlichungstag und Bekanntmachung des Hinweises auf die Patenterteilung: **24.01.2007**
(21) Anmeldenummer: 04022342.2
(22) Anmeldetag: 20.09.2004
(51) Int. Cl.: B62D 21/02, B62D 27/02

(54) **Plattform für Kraftfahrzeuge**
Car underbody platform
Cadre chassis pour véhicule

(30) Priorität: 13.11.2003 DE 10353235
(43) Veröffentlichungstag der Anmeldung: 18.05.2005
(73) Patentinhaber: IAV GmbH Ingenieurgesellschaft Auto und Verkehr, 10587 Berlin (DE)
(72) Erfinder: Bussat, Sven-Holger, 38531 Rötgesbüttel (DE); Maur, Markus, 10437 Berlin (DE); Poschmann, Michael, 38165 Lehre (DE); Schüssler, Marc, 38518 Gifhorn (DE); Tousen, Mamdouh, Dr., 38518 Gifhorn (DE)
(74) Vertreter: Bürger, Peter

(56) Entgegenhaltungen:
- WO-A-03/070543
- DE-A1- 4 322 716
- US-A- 5 549 352
- US-A1- 2003 178 834

## Beschreibung

Die Erfindung betrifft eine Plattform für Kraftfahrzeuge mit den im Oberbegriff des Patentanspruches 1 genannten Merkmalen.

Allgemein vorbekannt sind Plattformen bzw. Bodengruppen für Kraftfahrzeuge mit selbst- bzw. mittragenden Karossen, die mittels festverbundener Längs- und Querträger sowie zwischen diesen angeordneten Flächen- und Formelementen gebildet sind. Dabei sind an den Plattformen direkt oder unter Zwischenschaltung von Karosseriesäulen Tragarme für die Abstützung der vorderen und hinteren Radführungen und Aufnahmestreben für einen Triebsatz sowie Verbindungselemente und -bereiche für eine oder mehrere Gruppen von Dachsäulen und/oder Tragarme und Aufnahmestreben vorhanden.

Allgemein ist auch das Bestreben bekannt, mehr oder minder einheitlichen Aufbau und gleichartige Herstellungstechnologien für unterschiedliche Fahrzeuggrößen und -gestaltungen zu ermöglichen. Dieses ist aus nachfolgend genannten Schriften zu entnehmen.

Vorbekannt ist durch die Schrift DE 100 45 750 A1 ein Fahrzeug mit einem leiterförmigen Tragrahmen, der auch einen Rahmen für den Raum eines Frontfahrerhauses umfasst und durch gefügte Einzelelemente gebildet ist. Der Bereich der Ladefläche wird durch einen räumlich verstrebt gestalteten Leiterrahmen gebildet, an dessen Ende Längsträger für die hinteren Radaufhängungen verlaufen. An die Leiterrahmenstruktur schließt sich nach vorne gerichtet ein den Fahrerhaus-Innenraum umschließendes Tragwerk an. Der Bodenbereich des Fahrerhauses wird von Tragarmen gehalten, an welchen sowohl der Triebsatz als auch die vorderen Radaufhängungen jeweils abgestützt sind. Dieser Aufbau gestattet es, unterschiedliche Fahrzeuggrößen und -ausführungen in jeweils ähnlicher Form herzustellen.

Vorbekannt ist durch die Schriften EP 0 229 591 B 1 = DE 35 43 929 A1 ein Fahrzeug, dessen Rahmen und Karosseriekörper vollständig aus mechanisch verbundenen Leichtmetallprofilen hergestellt ist. Die dabei angewandten Profilformen sind in ihrem Querschnittsaufbau und der Außenform dem jeweiligen Einsatzbereich angepasst. Das gezeigte Fahrzeug weist einen aus drei Längsträgern und Querverstrebungen gebildeten Tragrahmen auf, wobei diese Elemente über Eckverbinder verschraubt ggf. auch vernietet sind. Der Karosseriekörper wird aus flächigen Profilen, die mittels Form- und Renk- und Schraubverbindungen verbunden sind, gebildet.

Vorbekannt ist es durch die Schrift DE 196 03 957, einen oberen Querträger eines Fahrzeug-Frontendteiles aus in ihrer Außenform angepasst gestalteten, mit Verbindungskonturen versehenen Teilen zu bilden, wobei dies mittels Form- und Renk- und Schraubverbindungen erreicht wird. Solche Querträger sind durch die Anzahl der eingesetzten Teile und in ihren Abmessungen variierbar.

Vorbekannt ist durch die Schrift DE 195 38 456 A1 eine Bodengruppe für Kraftfahrzeuge, die als leiterförmige Rahmenstruktur gestaltet ist und im wesentlichen von Profilen, insbesondere Strangprofilen aus Leichtmetall, gebildet wird. Zwei an den Fahrzeugseiten verlaufende Längsträger und ein in Fahrzeugmitte verlaufender mittlerer Längsträger sind über wenigstens zwei quer zu den Längsträgern angeordnete Querträger zu einem Rahmen verbunden. Der mittlere Längsträger ist jeweils über ein Knotenelement mit einem der Querträger verbunden.

Vorbekannt ist durch die Schrift DE 30 08 840 C2 ein selbsttragendes Karosserieskelett, das aus unterschiedlichen, längs und quer mittels Knotenverbindern durch Schweißen zusammengefügten Rohrabschnitten zusammengesetzt ist und auch die Bereiche der Abstützung der Radaufhängungen bildet.

Vorbekannt ist durch die Schrift DE 43 18 080 A1 ein System für den Bau von Sonderfahrzeugen, bei dem unter Einsatz einer einheitlichen Front- und Fahrerkabine Fahrzeuge mit unterschiedlichen Karosserieformen und Größen hergestellt werden können. Mittels gleichartigen Winkel-, Flächen- und Funktionalelementen, z. B. Türen - und Fenstereinbaueinheiten, wird eine gleichartige Aufbau- und Fügetechnologie realisiert. Eine derartige Plattform für Kraftfahrzeuge gemäß dem Oberbegriff des Anspruchs 1 ist aus dem Dokument WO-A-03/070543 sowie aus dem Dokument DE-A-4 322 716 zu entnehmen.

In den vorbeschriebenen Schriften sind die Tragkonstruktionen für den Fahrzeugboden im wesentlichen durch Profile und eingelegte bzw. aufgeschraubte Flächenelemente gebildet.

Der Erfindung liegt die Aufgabe zugrunde, Kfz-Plattformen unterschiedlicher Dimensionierung und Ausgestaltung in konstruktiv und technologisch gleichartiger Weise auszuführen, um jeweils gleichartige oder ähnliche Fügetechnologien für die Herstellung der Plattform und zur Verbindung mit der Karosserie einsetzen zu können. Dabei sollen Einzelelemente, die auf unterschiedliche Weise hergestellt bzw. geformt sein können, zum Einsatz kommen.

Erfindungsgemäß wird die Aufgabe durch die Merkmale des Patentanspruches 1 gelöst.

Erfindungsgemäß sind die Verbindungselemente und -bereiche an der Plattform für deren unterschiedlich dimensionierbare Längs- sowie Querträger und anzufügende Elemente - wie Dachsäulen, Tragarme, Aufnahmestreben, querverlaufende Flächen- und Formelemente - jeweils für mindestens eine Gruppe der anzufügenden Teile und Elemente gleichartig ausgeführt. Mit einer solchen gruppenweise gleichartigen Gestaltung der Verbindungselemente und -bereiche ist es möglich, für Fahrzeugtypen mit unterschiedlichen Dimensionen den konstruktiven und technologischen Aufwand für Verbindungen an der Plattform zu verringern und weitgehend gleichartige Werkzeuge und Schweißeinrichtungen zum Herstellen der Verbindungen einzusetzen.

Die Merkmale der Unteransprüche werden zusammen mit ihren Wirkungen und Vorteilen in der nachfolgenden Beschreibung erläutert.

Anhand von Zeichnungen wird die Erfindung nachfolgend an Ausführungsbeispielen näher beschrieben. In den dazugehörigen Zeichnungen zeigen:
- Fig. 1:: eine perspektivische Darstellung der erfindungsgemäßen Plattform für Kraftfahrzeuge,
- Fig. 2:: eine Draufsicht der erfindungsgemäßen Plattform für Kraftfahrzeuge gemäß Figur 1,
- Fig. 3:: eine Einzelheit gemäß Figur 1,
- Fig. 4 bis 6:: mehrere Ausführungsvarianten von Kraftfahrzeugen mit der erfindungsgemäßen Plattform.

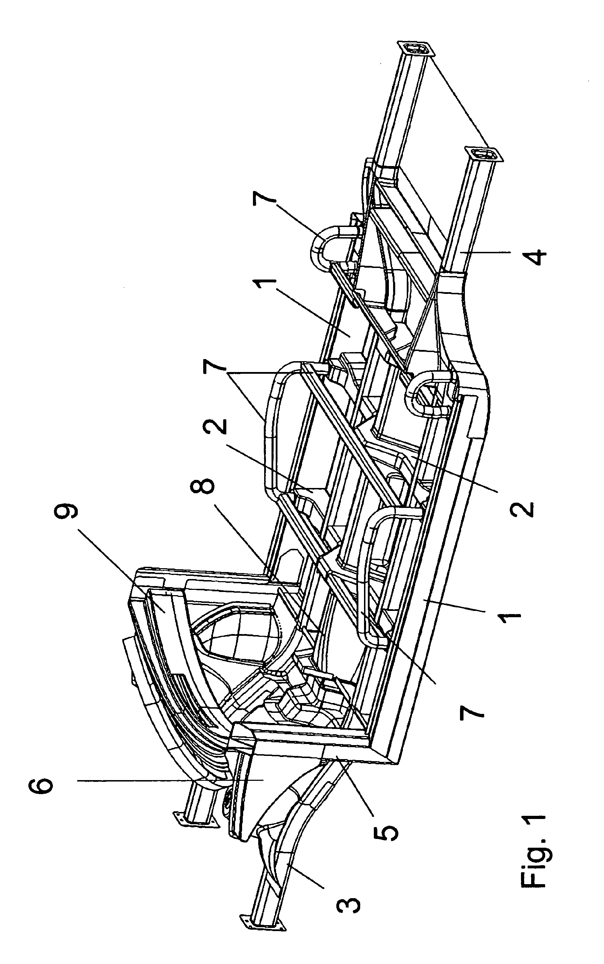

Die erfindungsgemäße Plattform für Kraftfahrzeuge gemäß Figur 1 weist festverbundene Längs- 1 und Querträger 2 sowie eine oder mehrere zwischen diesen angeordnete, verbindende Flächen- und Formelemente 8 aus Blech auf. Erfindungsgemäß sind die Verbindungselemente und -bereiche an der Plattform für deren unterschiedlich dimensionierbare Längs- 1 sowie Querträger 2 und anzufügende Elemente, wie Säulen 5, Tragarme 3; 4; 6, Aufnahmestreben 9; 10, querverlaufende Flächen- und Formelemente 8, jeweils für mindestens eine Gruppe der anzufügenden Teile und Elemente gleichartig ausgeführt. Weiterhin ist die gesamte Plattform dahingehend ausgelegt, dass sie unabhängig vom jeweiligen Aufbau einem Großteil der Belastungen aus den diversen Crashanforderungen standhält.

Die mit der Plattform verbundenen Säulen 5 können hinsichtlich ihrer Höhe oder/und Gestaltung sowie Bemessung variabel gestaltet sein, sodass prinzipiell gleichartig ausgebildete und gefügte Plattformen für unterschiedlich gestaltete und dimensionierte Fahrzeuge genutzt werden können.

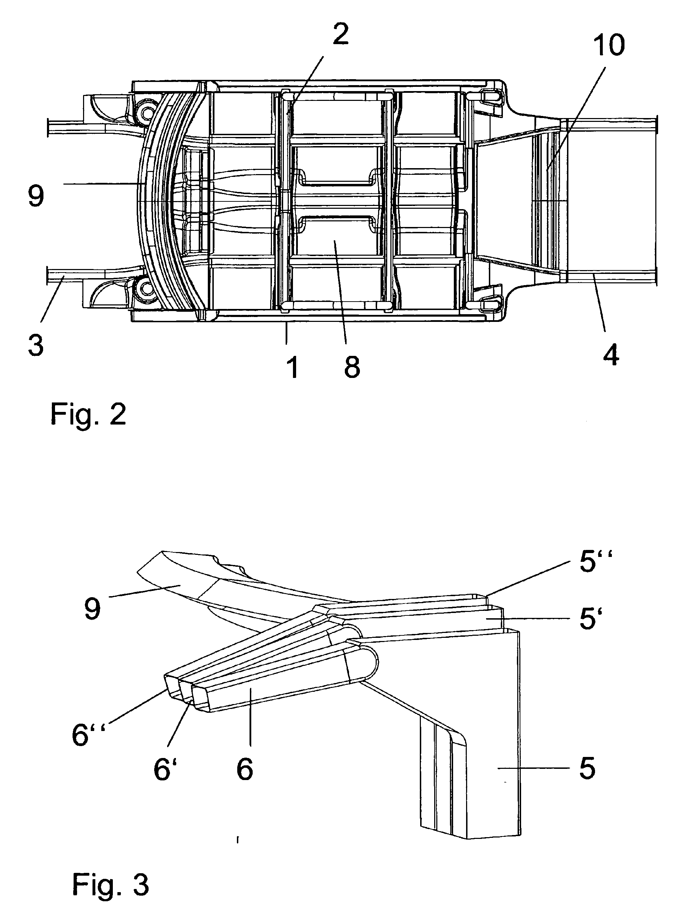

Die vordere Säule 5 kann durch ihre Gestaltung und Bemessung unterschiedlich angeordnete Tragarme 3; 6 und Aufnahmestreben 9 aufnehmen, um unterschiedliche Konturen für den Vorderwagen, die Bemessung des Motorenraumes und für die Gestaltung und Abstützung der Radaufhängung zu realisieren. In der Figur 3 ist die vordere Säule 5 als Einzelheit dargestellt, wobei zur Realisierung von verschiedenen Konturen des Vorderwagens die vordere Säule 5 und die Tragarme 6 in unterschiedlichen Anordnungen und Beschnitten dargestellt sind. Die Bezugszeichen der jeweiligen Varianten sind entsprechend mit einem bzw. zwei Strichen gekennzeichnet.

Durch unterschiedlich bemessenen und gestalteten hinteren Tragarme 4 und Aufnahmestreben 10 können unterschiedliche Fahrzeuglängen, unterschiedlich gestaltete Bereiche des Mittel- und Hinterwagens sowie Radaufhängungen der Hinterräder erzielt werden.

Je nach Fahrzeugart kann der Sitzbereich in einer jeweils anderen Lage auf der Plattform angeordnet sein. Durch die Anwendung einer oder mehrerer quer und/oder längs zur Fahrzeugachse steifer Sitzschutzanordnungen 7, die auf der Plattform als Einheiten befestigt werden, kann eine Anpassung der Plattform zur Versteifung des jeweiligen Sitzbereiches entfallen. Weiterhin ist durch die Sitzschutzanordnungen 7 ein ausreichender Insassenschutz gemäß den Seitencrashanforderungen, die vom Crashgegner ausgehen, die nicht den Längsträger 1 treffen, gewährleistet.

Bewegliche Karosserieteile, Türen, Klappen und/oder zu stabilisierende Außenflächen sind vorteilhaft über Adapter an Elementen der Plattform befestigt, die der aufgesetzten jeweiligen Karosserieform entsprechend an den Säulen angebracht sind.

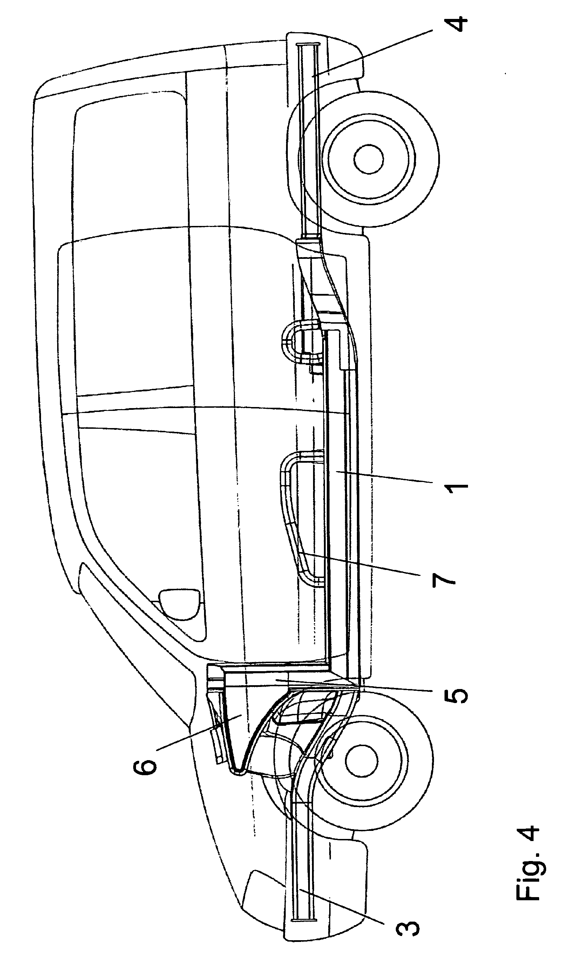

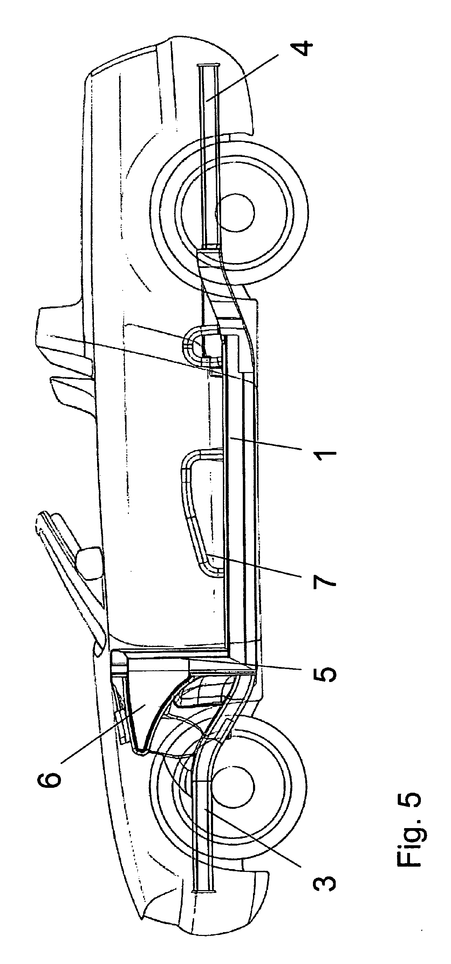

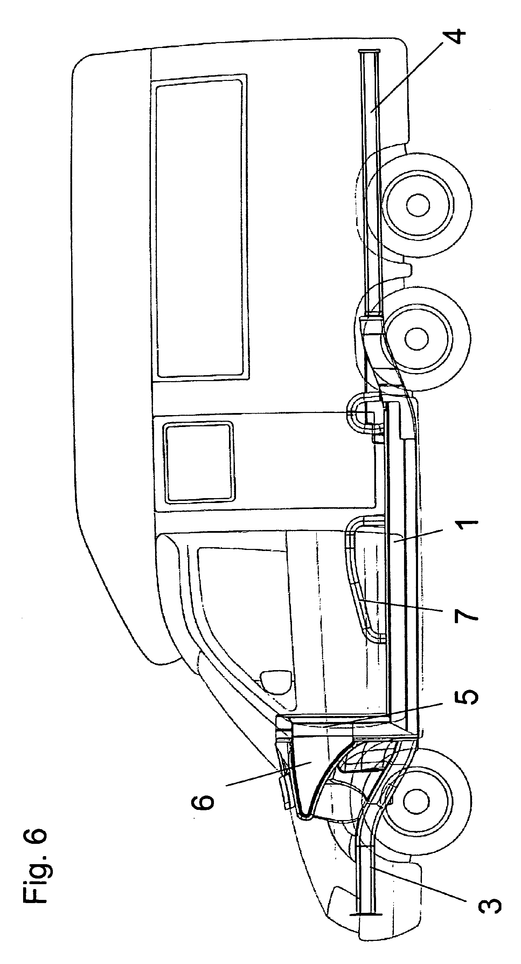

In den Figuren 4 bis 6 sind auf der Basis der erfindungsgemäßen Plattform für Kraftfahrzeuge beispielhaft mehrere unterschiedlich zu realisierende Kraftfahrzeugaufbauten dargestellt. Aus den entsprechenden Figuren ist zu erkennen, dass insbesondere durch Variation der Tragarme 3; 4; 6 und der Säulen 5 bei gleichartiger konstruktiver und technologischer Ausgestaltung verschiedene Fahrzeugaufbauten realisierbar sind.

### Aufstellung der verwendeten Bezugszeichen

- 1: Längsträger
- 2: Querträger
- 3: Tragarme für die Abstützung der Radführungen
- 4: Tragarme für die Abstützung der hinteren Radführungen
- 5: Säule
- 6: Tragarme
- 7: Sitzschutzanordnung
- 8: Flächen- und Formelemente
- 9: vordere Aufnahmestrebe
- 10: Aufnahmestrebe

## Patentansprüche

1. Plattform für Kraftfahrzeuge, die in folgender Weise ausgebildet ist,
- festverbundene Längs- (1) und Querträger (2) sowie eine oder mehrere zwischen diesen angeordnete, verbindende Flächen- und Formelemente (8) bilden die Plattform, welche Tragarme (3) für die Abstützung der vorderen und Tragarme (4) für die Abstützung der hinteren Radführungen und Aufnahmestreben (9) für einen Triebsatz aufweist,
- die Plattform weist Verbindungselemente und -bereiche für eine oder mehrere Gruppen von Dachsäulen (5) und/oder Tragarme (3; 4) und Aufnahmestreben (9; 10) auf,
**dadurch gekennzeichnet,**
**dass** zum Aufbau von unterschiedlichen Kfz-Plattformen die Verbindungselemente und -bereiche an unterschiedlich dimensionierten Fahrzeugbauteilen, wie Längs- (1) sowie Querträger (2) und anzufügende Elemente, wie Säulen (5), Tragarme (3; 4; 6), Aufnahmestreben (9; 10), querverlaufende Flächen- und Formelemente (8), jeweils für mindestens eine Gruppe der anzufügenden Teile und Elemente gleichartig ausgeführt sind.

2. Plattform nach Anspruch 1,
**dadurch gekennzeichnet,**
**dass** die mit der Muldenplattform verbundenen Säulen hinsichtlich ihrer Höhe oder/und Gestaltung sowie Bemessung variabel gestaltet sind.

3. Plattform nach Anspruch 1 und 2,
**dadurch gekennzeichnet,**
**dass** die vordere Säule (5) mit hinsichtlich der Gestaltung und Bemessung unterschiedlichen Tragarmen (3; 6) und Aufnahmestreben (9) ausgestattet ist.

4. Plattform nach einem oder mehreren der vorherigen Ansprüche,
**dadurch gekennzeichnet,**
**dass** die mit der Muldenplattform verbundenen hinteren Tragarme (4) und Aufnahmestreben (10) hinsichtlich der Gestaltung und Bemessung variabel gestaltet sind.

5. Plattform nach einem oder mehreren der vorherigen Ansprüche,
**durch gekennzeichnet,**
**dass** auf der Muldenplattform eine oder mehrere quer und/oder längs zur Fahrzeugachse, steife Sitzschutzanordnungen (7) befestigt sind.

6. Plattform nach einem oder mehreren der vorherigen Ansprüche,
**dadurch gekennzeichnet,**
**dass** bewegliche Karosserieteile, Türen, Klappen und/oder zu stabilisierende Außenflächen über Adapter an Elementen der Plattform befestigt sind.

## Claims

1. Platform for motor vehicles, which is designed as follows:
- firmly connected side members (1) and cross members (2) together with connecting surface profile elements (8) arranged between these form the platform, which has support arms (3) for supporting the front wheel suspensions and support arms (4) for supporting the rear wheel suspensions and mounting struts (9) for a power unit,
- the platform has fasteners and connecting areas for one or more groups of roof pillars (5) and/or support arms (3; 4) and mounting struts (9; 10),
**characterized in that**
in order to build different motor vehicle platforms the fasteners and the connecting areas for variously dimensioned vehicle components, such as longitudinal members (1) and cross members (2), and elements to be joined, such as pillars (5), support arms (3; 4; 6), mounting struts (9; 10) and transverse surface profile elements (8) are in each case of uniform design for at least one group of parts and elements to be joined.

2. Platform according to Claim 1,
**characterized in that**
the pillars connected to the body platform are of variable configuration in terms of their height and/or their design and dimensions.

3. Platform according to Claim 1 and 2,
**characterized in that**
the front pillar (5) is fitted with support arms (3; 6) and mounting struts (9) of differing design and dimensions.

4. Platform according to any one or more of the preceding claims,
**characterized in that**
the rear support arms (4) and mounting struts (10) connected to the body platform are of variable configuration in terms of their design and dimensions.

5. Platform according to any one or more of the preceding claims,
**characterized in that**
one or more side impact arrangements (7) transversely and/or longitudinally rigid in relation to the vehicle axis are fixed on the body platform.

6. Platform according to any one or more of the preceding claims,
**characterized in that**
moving body parts, doors, hatches and/or external surfaces that need to be stabilized are fixed by way of adapters to elements of the platform.

## Revendications

1. Plate-forme de véhicule automobile, formée de la manière suivante :
- des longerons (1) et des traverses (2) solidement reliés entre eux ainsi qu'un ou plusieurs éléments de liaison surfaciques et moulés (8) interposés entre ceux-ci forment la plate-forme qui comporte des bras porteurs (3) contre lesquels sont destinés à venir en appui les guidages de roue avant et des bras porteurs (4) contre lesquels sont destinés à venir en appui les guidages de roue arrière et des traverses de support (9) d'un groupe motopropulseur,
- la plate-forme comporte des éléments et des zones de liaison pour un ou plusieurs groupes de montants de toit (5) et/ou des bras porteurs (3 ; 4) et des traverses de support (9 ; 10),
**caractérisée en ce**
**que**, pour construire des plates-formes de véhicules automobiles différentes, les éléments et zones de liaison sur des pièces de véhicule de différentes dimensions, telles les longerons (1) et les traverses (2) et des éléments qu'il y a lieu d'y rapporter tels que les montants (5), les bras porteurs (3 ; 4 ; 6), les traverses de support (9 ; 10), les éléments surfaciques et moulés transversaux (8) sont réalisés de la même manière pour au moins un groupe de pièces et d'éléments à rapporter.

2. Plate-forme selon la revendication 1,
**caractérisée en ce**
**que** les montants reliés à la plate-forme à renfoncement sont conçus avec une hauteur et/ou une forme ainsi que des dimensions variables.

3. Plate-forme selon la revendication 1 et 2,
**caractérisée en ce**
**que** le montant avant (5) est équipé de bras porteurs (3 ; 6) et de traverses de support (9) de formes et de dimensions différentes.

4. Plate-forme selon une ou plusieurs des revendications précédentes,
**caractérisée en ce**
**que** les bras porteurs (4) et les traverses de support (10) arrière reliés à la plate-forme à renfoncement sont conçus avec des formes et des dimensions variables.

5. Plate-forme selon une ou plusieurs des revendications précédentes,
**caractérisée en ce**
**qu'**un ou plusieurs agencements de protection de sièges (7) rigides disposés en travers et/ou dans le sens de la longueur de l'axe du véhicule sont fixés sur la plate-forme à renfoncements.

6. Plate-forme selon une ou plusieurs des revendications précédentes,
**caractérisée en ce**
**que** des pièces de carrosserie mobiles, portes, hayons et/ou des surfaces extérieures qu'il y a lieu de stabiliser sont fixés sur des éléments de la plate-forme par l'intermédiaire d'adaptateurs.
